# EUROPEAN PATENT SPECIFICATION

(11) **EP 0 905 520 B1**
(45) Date of publication and mention of the grant of the patent: **26.03.2008**
(21) Application number: 98810649.8
(22) Date of filing: 08.07.1998
(51) Int. Cl.: G01N 35/00, B03C 1/28, G01N 33/543

(54) **Apparatus for separating magnetic particles**
Gerät zur Abscheidung magnetischer Teilchen
Appareil de séparation de particules magnétiques

(30) Priority: 29.09.1997 EP 97116857
(43) Date of publication of application: 31.03.1999
(60) Divisional application: 06013082.0
(73) Proprietor: F. Hoffmann-La Roche AG, 4070 Basel (CH)
(72) Inventor: Bächler, Guido, Berkeley, CA 94707 (US); Hunziker, Patrick, 6020 Emmenbrücke (CH); Rey, Werner, 6030 Ebikon (CH)
(74) Representative: Ventocilla, Abraham

(56) References cited:
- EP-A- 0 691 541
- EP-A- 0 712 000
- WO-A-93/08919
- WO-A-96/26011
- WO-A-96/31781
- DE-A- 4 429 155
- US-A- 3 752 443
- US-A- 5 670 329
- US-A- 5 770 461

## Description

The invention relates to an apparatus for separating magnetic particles in suspension in a liquid contained in a reaction vessel of the type used in an automatic apparatus for processing biological samples, said processing including introducing a sample and one or more reagents into the reaction vessel.

Magnetic particles are used as solid phase for performing diagnostic assays, e.g. immunoassays. Such assays comprise steps in which the magnetic particles are in suspension in a reaction solution contained in a reaction vessel. In other steps it is necessary to separate the magnetic particles from the liquid contained in the reaction vessel. In known apparatus this is usually done by attracting the magnetic particles to the walls of the reaction vessel by means of magnets positioned close to the outer side wall of the reaction vessel and by extracting the liquid from the reaction vessel by suitable means. This separation step is usually followed by a so called washing step in which the magnets are withdrawn to eliminate the magnetic force which held the magnetic particles on the inner wall of the reaction vessel during the previous separation step and fresh liquid pipetted into the reaction vessel in a way suitable to cause resuspension of the magnetic particles in the liquid contained in the reaction vessel.

A disadvantage of known apparatuses for performing the above described separation step is that the relative movement of the magnet or magnets with respect to the reaction vessel is a translational movement and this has the disadvantage that the magnetic force exerted on the magnetic particles cannot be quickly removed and this causes an undesirable delay of the resuspension step. According to WO-A-96/31781 this latter disadvantage can be overcome by moving the magnet or magnets along a circular path.

In known apparatuses for performing the above described separation step the magnet or magnets used therefor are positioned always at the same position. This has the disadvantage that the separation step is carried out properly and fast enough only for a limited variation range of the amount of the reaction solution contained in the reaction vessel. Outside that limited range the separation step is too slow and not quite proper.

DE-A-44 29 155 discloses an apparatus according to the preamble of claim 1.
DE-A-44 29 155 discloses a measuring system for performing luminometric series analyses on reaction components to be investigated and on the liquid samples 12 containing magnetizable carrier particles binding said components. The samples are transported in cuvette units of a multiple cuvette on a conveyor to a measuring station where the concentration of the target substance to be determined is determined by a luminescence measurement. To remove surplus reaction components that would distort measurement, multiple cuvettes are transported past a plurality of rotating permanent magnets. The lobe-shaped magnetic fields of those magnets penetrate cuvette units sequentially and from opposite wall areas. As a result the carrier particles are carried along spiral paths through the sample liquid and concentrated as pellets. The surplus reaction components separated from the carrier particles can then be removed in a rinsing and suction process. DE-A-44 29 155 describes in particular an embodiment wherein each permanent magnet is a double magnet that consists of two bar magnets that are preferably cylindrical, arranged parallel to one another with opposite polarity, with the double magnets being rotatable by means of a rotary drive around an axis of rotation that extends parallel to the magnetic axis of the magnets and perpendicular to the transport path of the conveyor. As a result, the magnetic fields generated by the rotating magnets penetrates the cuvette units in the form of a lobe, under whose influence the carrier particles move along long spiral paths and can accumulate pointwise as pellets on the cuvette walls.

WO-A-93/08919 describes a device for removing magnetic particles from a liquid contained in a container, wherein the free surface of the liquid is kept at constant level. This device comprises a disc which is drivable in rotation and on which an array of permanent magnets is arranged. The disc is connected to a rotation shaft which extends along the rotation axis of the disc and which is driven by a motor. The rotation shaft lies above the free surface of the liquid in the container. The magnets of the array are arranged in concentric circles on the disc. The magnets on each circle are uniformly angularly spaced along the circle, so that several magnets are arranged on the same radius at different distances from the center of the disc. The disc with the array of magnets is positioned close to the container. The magnetic forces provided by the magnets of the rotating array of magnets pulls the magnetic particles out of the liquid and out of the container and deposit them on the magnets outside the container and are removed therefrom by a scraping member positioned closed to the disc.

EP-A-691541 discloses a device wherein a single permanent magnet positioned close to a vessel which has a vertical length axis and which contains a liquid in which magnetic particles are in suspension. According to EP-A-691541 the device comprises a pipetting tip, a pump connected to said tip, a magnet, and a device for moving the pipetting tip toward and away from said magnet, or a device for moving the magnet toward and away from said pipetting tip. According to EP-A-691541 the pipetting tip, the magnet, and the device for moving the pipetting tip and the magnet relative to each other are configured such that the pipetting tip and magnet are movable relative to one another in direction of the longitudinal vertical axis of the pipetting tip from a first position wherein the magnet is proximate an upper level of liquid inside the pipetting tip to a second position wherein the magnet is proximate the pipetting tip. According to EP-A-691541 resuspension of separated magnetic microparticles is achieved either by keeping the magnet stationary and rotating the pipetting tip around its vertical length axis or by moving the magnet around the pipetting tip by mounting the magnet on a rotatable support that rotates the magnet around the length axis of the pipetting tip.

US-A-5770461 discloses arrangements wherein a rotatable single permanent magnet is positioned close to a vessel which has a vertical length axis and which contains a liquid in which magnetic particles are in suspension. In a first embodiment (Fig. 8) described in US-A-5770461, the magnetic axis of the permanent magnet is parallel to the vertical length axis of the vessel and the rotation axis of the permanent magnet is perpendicular to the vertical length axis of the vessel. In a second embodiment (Fig. 9) described in US-A-5770461, the magnetic axis of the permanent magnet is perpendicular to the vertical length axis of the vessel and the rotation axis of the permanent magnet is parallel to the vertical length axis of the vessel.

WO-A-96/26011 describes arrangements wherein an assembly of magnetic elements mounted on a rotatable support is positioned close to a vessel which has a vertical length axis and which contains a liquid in which magnetic particles are in suspension. The rotatable support has a rotation axis parallel to the vertical length axis of the vessel. When the rotatable support is rotated, the assembly of magnetic elements orbits around the reaction vessel.

A main aim of the invention, therefore, is to provide an apparatus of the type indicated in the preamble of this description so devised as to overcome the above mentioned disadvantages of prior art apparatuses.

A further aim of the invention is to provide an apparatus of the type indicated in the preamble which is in addition suitable for performing not only the above described separation step, but also the washing step.

According to the invention, the above mentioned aims are attained with an apparatus according to claim 1. Preferred embodiments are defined by claims 2 to 6.

The main advantage of the apparatus according to the invention as compared with the prior art is that it makes possible to obtain a fast separation of magnetic particles contained in suspension in a reaction solution contained in a reaction vessel. This fast separation being obtained by rapid positioning of magnets close to the reaction vessel and at a plurality of selected heights with respect to the bottom of the reaction vessel, the height at which a magnet is positioned at a given point of time being selected according to a processing step to be carried out in the reaction vessel and/or according to the amount of reaction solution contained in the reaction vessel. This makes possible optimum adaptation of magnetic particle separation step to the process step being carried out in the reaction vessel.

A further advantage of the apparatus according to the invention is that it also makes possible rapid removal of magnets positioned close to the reaction vessel during a separation step. This rapid removal makes possible to reduce the time interval necessary to obtain a resuspension of the magnetic particles in liquid contained in the reaction vessel.

A further advantage of the apparatus according to the invention is that the combined effect of magnets positioned on opposite sides of a reaction vessel makes possible to obtain a particularly fast separation of magnetic particles contained in suspension in a reaction solution contained in a reaction vessel, and that such a fast separation is obtained even if the width of this vessel is above the average.

A further advantage of the apparatus according to the invention is that it makes possible to carry out a washing step, that is a washing of the magnetic particles in suspension in a liquid, e.g. water, contained in a reaction vessel, by alternatively positioning a magnet or an array of magnet elements either on one side of the vessel or on the opposite side of the vessel, and thereby causing migration of the magnetic particles through the liquid from one side of the vessel to the opposite side thereof, the sense of this migration being reversed by changing the side on which a magnet is positioned close to the vessel.

Another preferred embodiment of the apparatus according to the invention is characterized in that each of the magnet elements of said array or arrays of magnet elements comprises one or more magnets having the same width and the same azimuthal position on the carrier of the array.

A further preferred embodiment of the apparatus according to the invention is characterized in that the axis of rotation of the carrier, respectively of each of the carriers, intersects with the length axis of the reaction vessel at a point located below the bottom of the reaction vessel.

The apparatus according to the invention comprises a first and a second rotatable carrier and is characterized in that the carriers have a common axis of rotation.

A further preferred embodiment of the apparatus according to the invention is characterized in that said means for selectively positioning said carrier or carriers are apt to position said carrier or carriers at predetermined angular positions which are selected according to a processing step to be carried out in that reaction vessel and/or according to the amount of liquid in the reaction vessel.

A further preferred embodiment of the apparatus according to the invention is characterized in that said plurality of predetermined angular positions include one position at which no magnet element of said array or arrays of magnet elements is located close to any external surface of the reaction vessel.

Examples of embodiments of an apparatus according to the invention are described below with reference to the accompanying drawings wherein:
- Fig. 1: is a schematic front view of an example of an apparatus similar to the one of the invention.
- Fig. 2: is a side elevation of the apparatus according to Fig. 1.
- Fig. 3: is a plan view of the apparatus according to Fig. 1.
- Fig. 4: is a front view of a first embodiment of an array of magnet elements held by carrier 12 in Fig. 1.
- Fig. 5: is a front view of a second example of an array of magnet elements held by carrier 12 in Fig. 1.
- Fig. 6: is an exploded view of magnet array carriers of an apparatus according to the invention described as a first embodiment.
- Fig. 7a: shows a front view of an apparatus according to the invention described as a second embodiment.
- Fig. 7b: shows a side elevation view including a cross-section through planes indicated by lines A-A of the apparatus according to Fig. 7a and shows also a reaction vessel 13.

Figures 8a and 8b, etc. up to Figures 21a and 21b show the carriers of arrays of magnet elements shown by Figures 7a and 7b in a plurality of angular positions and also illustrate different processing steps carried out in the reaction vessel 13.

Several embodiments of apparatuses are described hereinafter. These embodiments comprise each two rotatable carriers of magnet arrays.

### First example

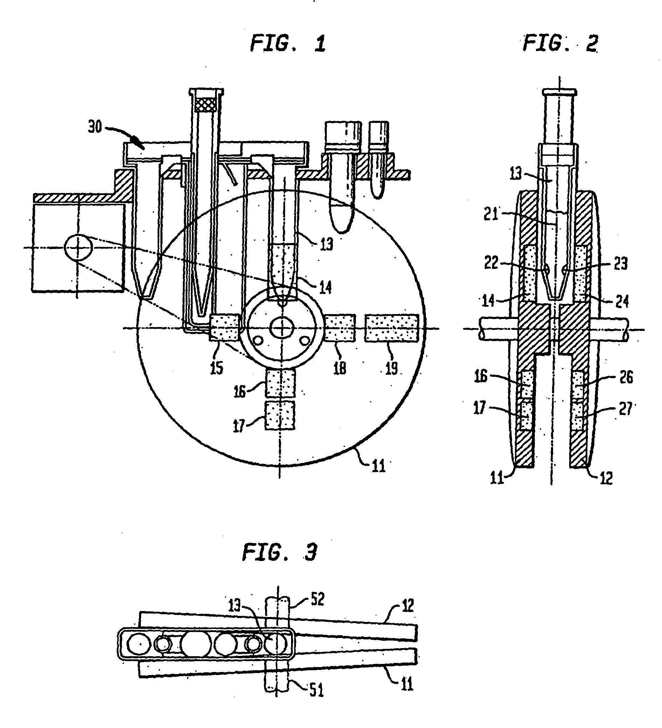

An example of an apparatus similar to the one of the invention is shown by Figures 1 to 4 and is described hereinafter as an example not covered by the invention. This figures show an apparatus for separating magnet particles in suspension in a liquid contained in a reaction vessel 13 of the type used in an automatic apparatus for processing biological samples. Such a processing includes introduction of a sample and one or more reagents into reaction vessel 13. The apparatus shown by Figures 1 to 4 comprises a first carrier 11 holding a first array of magnet elements 14-19. Carrier 11 is rotatable about a rotation axis 51.

As shown by Fig. 1. the first array of magnet elements 14-19 comprises a first magnet element 14 and at least a second magnet element 15. These magnet elements are positioned on the carrier 11 at different distances from the rotation axis 51. Some of the magnet elements 14-19 lie on the same radius, e.g. magnet elements 18 and 19, and some of the magnet elements of the array lie on radii located at different azimuth angles, e.g. magnet element 14 and magnet element 15.

The carrier 11 and the array of magnet elements 14-19 are so configured and dimensioned that by rotation of carrier 11 one or more of the magnet elements of the first array of magnet elements 14-19 can be positioned close to the external surface of the side wall of the reaction vessel 13 on one side thereof.

The apparatus further comprises a motor and mechanical transmission means controlled by suitable control means for rotating and selectively positioning said carrier 11 and thereby said array of magnet elements 14-19 at a plurality of predetermined angular positions with respect to reaction vessel 13.

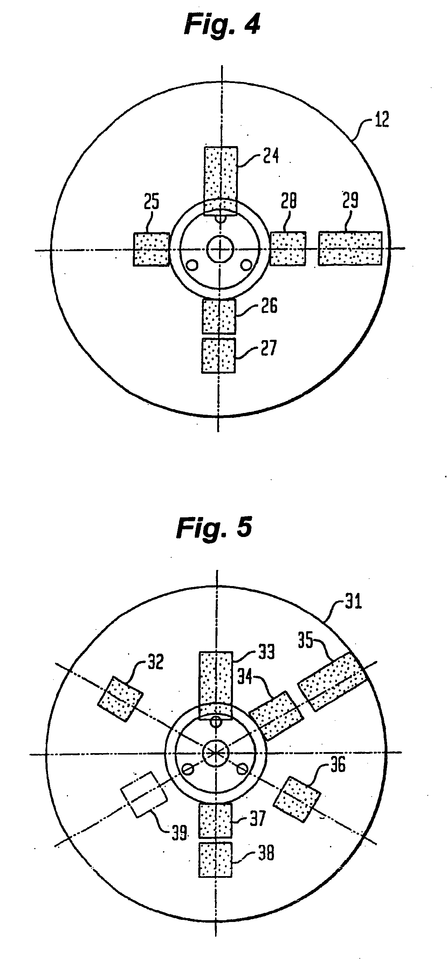

The apparatus further comprises a second carrier 12 holding a second array of magnet elements 24-29 shown by Fig. 4. Carrier 12 is rotatable about a rotation axis 52.

The above description of carrier 11 and array of magnet elements 14-19 also applies to carrier 12 and array of magnet elements 24-29, because both arrays of magnet elements are symmetrically arranged with respect to the longitudinal symmetry axis of reaction vessel, so that for each angular position of carriers 11, 12 identically configured magnet elements or arrays of magnet elements are positioned on opposite sides of reaction vessel 13.

Carriers 11, 12 are so connected with each other that rotation of one the carriers of a predetermined angle causes rotation of the other carrier of the same angle.

Each of the magnet elements of the arrays of magnet elements 14-19 or 24-29 comprises one or more magnets having preferably the same width and the same azimuthal position on the carrier of the array.

The axis 51 of rotation of carrier 11 and the axis 52 of rotation of carrier 12 intersect with the length axis of reaction vessel 13 at a point located below the bottom of reaction vessel 13.

In the example shown by Figures 1 to 4, the axis of rotation 51, 52 of the carriers 11, 12 form an angle which is in the range between 5 and 10 degrees. This is preferred when reaction vessel 13 is part of a processing unit having a configuration that makes suitable to have such an angle between the rotation axis 51, 52. For the apparatus of the invention the carriers 62, 63 have a common axis of rotation.

### Second example

A second example of an apparatus is described hereinafter with reference to Fig. 5 as an example not covered by the invention. This second example is similar to the one described with reference to Figures 1 to 4, but differs therefrom in that it comprises one or two carriers on each of which an array of magnets is mounted which differs from the arrays of magnets described with reference to Figures 1-4. A preferred array of magnets for this second example of the apparatus is array of magnets 32-39 mounted on a carrier 31 as shown in Fig. 5.

### First embodiment

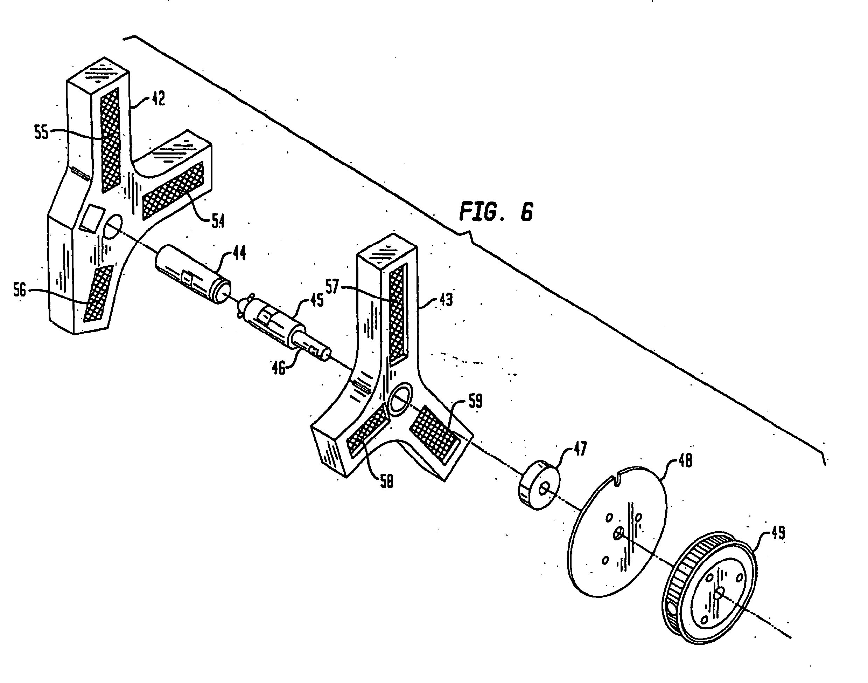

A first embodiment of an apparatus according to the invention comprises magnet arrays shown by Fig. 6. The exploded view shown by this Figure shows a first carrier 42 which carries an array of magnet elements 54, 55, 56 and a second carrier 43 which carries an array of magnet elements 57, 58, 59. Carriers 42, 43 are connected with each other an with a driving wheel 49 by means of coupling elements 44, 45, a ring 47 and a disk 48. Coupling element 45 includes a shaft 46 driven by driving wheel 49. Driving wheel 49 is connected to a motor and suitable control means not shown in Fig. 6. By means of such motor and control means carriers 42, 43 can be rotated to a plurality of angular positions for positioning magnet elements on carrier 42 and/or carrier 43 close to the external surface of the side wall of a reaction vessel positioned between carriers 42, 43. The main difference between this third embodiment and the above described first and second embodiments is that in this third embodiment in some angular positions magnet elements can be asymmetrically positioned with respect to the reaction vessel. This makes possible to have angular positions where a magnet element is positioned only on one side of the reaction vessel, other angular positions where magnet elements are positioned on opposite sides of the reaction vessel, and also angular positions at which no magnet element is positioned close to the external surface of the side wall of the reaction vessel.

### Second embodiment

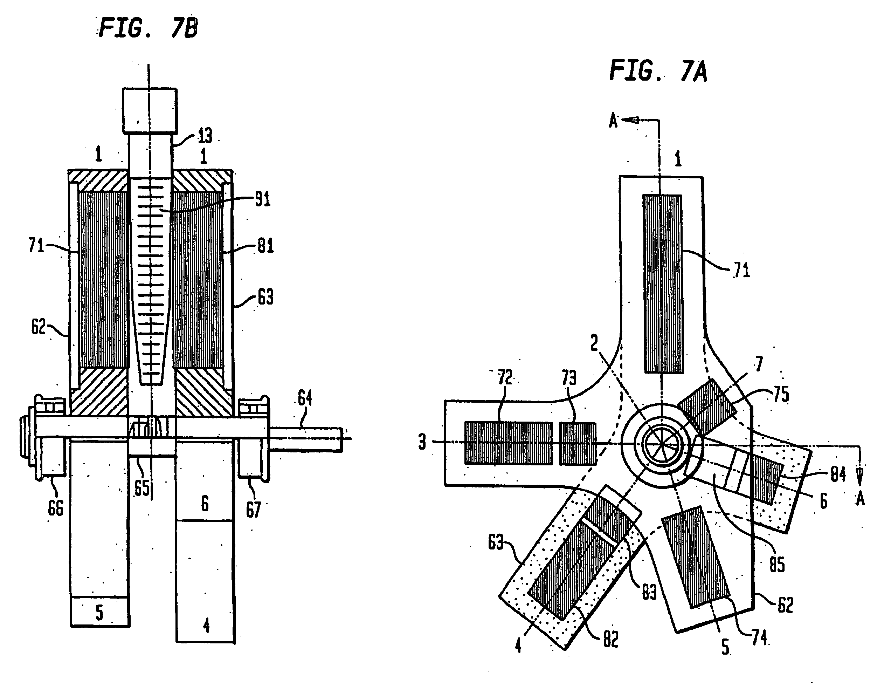

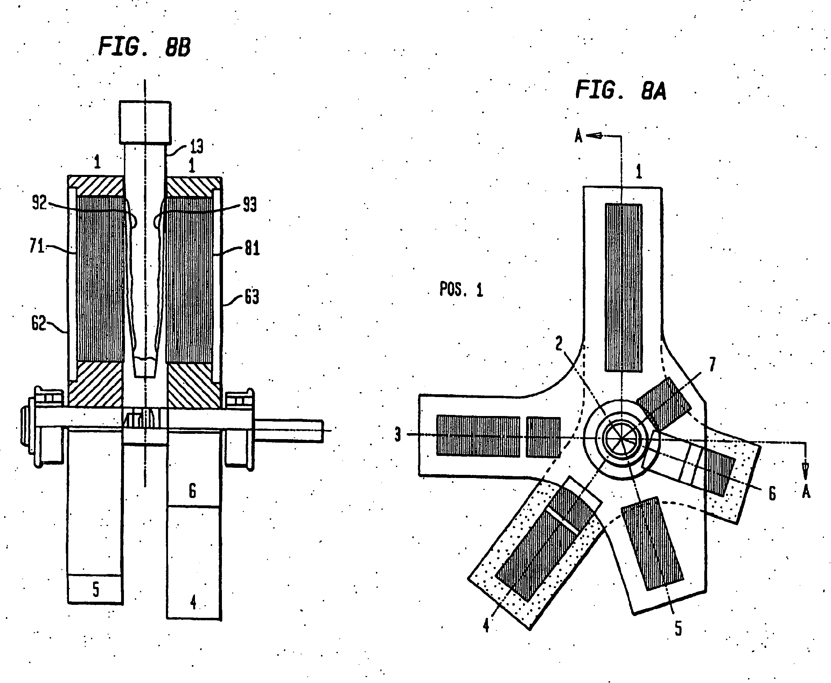

An apparatus according to the invention is described hereinafter with reference to Figures 7a, 7b, 8a, 8b, etc. up to 20a, 20b as a second embodiment.

Fig. 7a shows a front view of carriers 62, 63 which carry magnet arrays 71-75 and 81-85 respectively. Fig. 7b shows a side elevation view including a cross-section through planes indicated by lines A-A of the apparatus according to Fig. 7a and shows also a reaction vessel 13 positioned between carriers 62, 63.

Carriers 62, 63 are connected to a shaft 64 supported by bearings 66, 67. A coupling element 65 connects carriers 62 and 63 with each other. Shaft 64 is connected to motor and mechanical transmission means (not shown) controlled by suitable control means for rotating and selectively positioning said carriers 62, 63 and thereby the arrays of magnet elements mounted on them at a plurality of predetermined angular positions with respect to reaction vessel 13 positioned between carriers 62, 63.

Figures 7a, 7b and the figures following them show various angular positions of carriers 62, 63 and thereby various corresponding angular positions of the magnet arrays mounted thereon with respect to a reaction vessel 13 located at a predetermined stationary position between carriers 62, 63. Figures 7a, 7b and the figures following them illustrate in addition various processing steps carried out with respect to the contents of the reaction vessel 13.

### Use of an apparatus according to the invention

Such a use is described hereinafter for carrying a process to isolate a nucleic acid from biological cell material with the fourth embodiment of an apparatus according to the invention described above with reference to Figures 7a and 7b. Such a process comprises the following steps illustrated by the Figures indicated between parentheses:

### Step 1: Separation of magnetic particles (Figs. 7a, 7b)

In this step carriers 62 and 63 have the angular position (Pos. 1) shown by Fig. 7a. Fig. 7b shows a cross-section through A-A in Fig. 7a. As shown by Fig. 7b, reaction vessel 13 contains a predetermined volume, e.g. 2.7 ml, of a lysing suspension 91 which contains biological cell material to be lysed and magnetic particles used as solid phase in a process for isolating nucleic acid contained in said cell material. Magnets 71 and 81 located on opposite sides of and close to the external surface of the side wall of reaction vessel 13 attract magnetic particles contained in lysing suspension 91 towards the inner surface of the side wall of reaction vessel 13. In this way the magnetic particles are grouped in layers deposited on opposite sides 92, 93 of the inner surface of the side wall of reaction vessel 13.

### Step 2: Aspiration of lysing suspension (Figs. 8a, 8b)

As shown by Fig. 8a, in this step carriers 62 and 63 have the same angular position (Pos. 1) as in step 1. Fig. 8b shows a cross-section through A-A in Fig. 8a. In this step 2 lysing suspension 91 is aspirated from reaction vessel 13 e.g. by means of an automatic pipettor, and as shown by Fig. 8b a layer of magnetic particles remains held on each of the opposite sides 92, 93 of the inner surface of the side wall of reaction vessel 13 by action of magnetic force exerted on those particles by magnets 71 and 81.

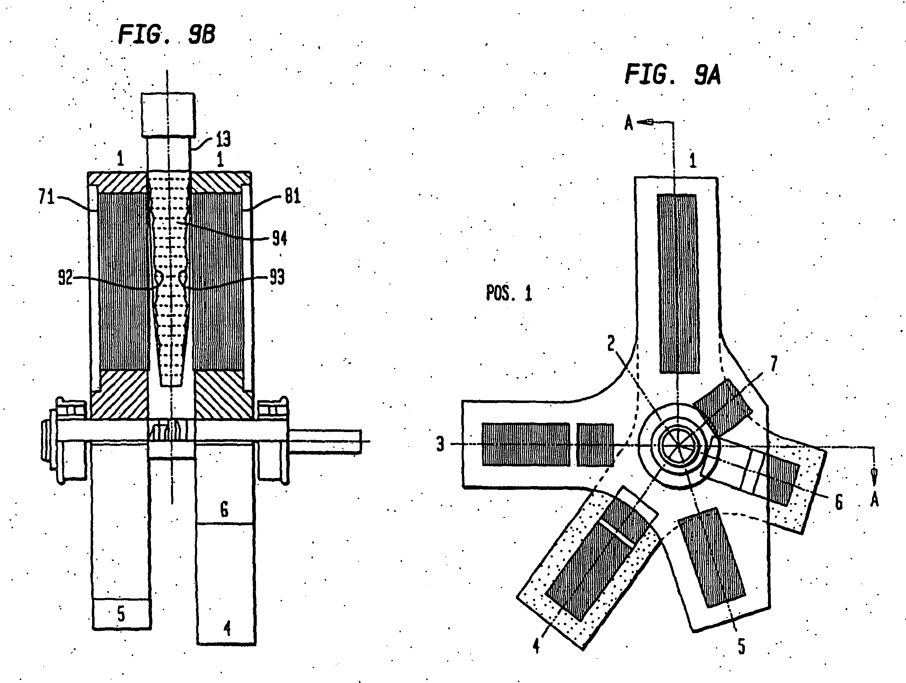

### Step 3: Dispensing of a first wash buffer (Figs. 9a, 9b)

As shown by Fig. 9a, in this step carriers 62 and 63 have the same angular position (Pos. 1) as in steps 1 and 2. Fig. 9b shows a cross-section through A-A in Fig. 9a. A predetermined volume, e.g. 2.8 ml, of a first wash buffer 94 is introduced in reaction vessel 13, and as shown by Fig. 9b layers of magnetic particles remain held on the inner surface of sides 92, 93 of the side wall of reaction vessel 13 by magnetic force exerted on those particles by magnets 71 and 81.

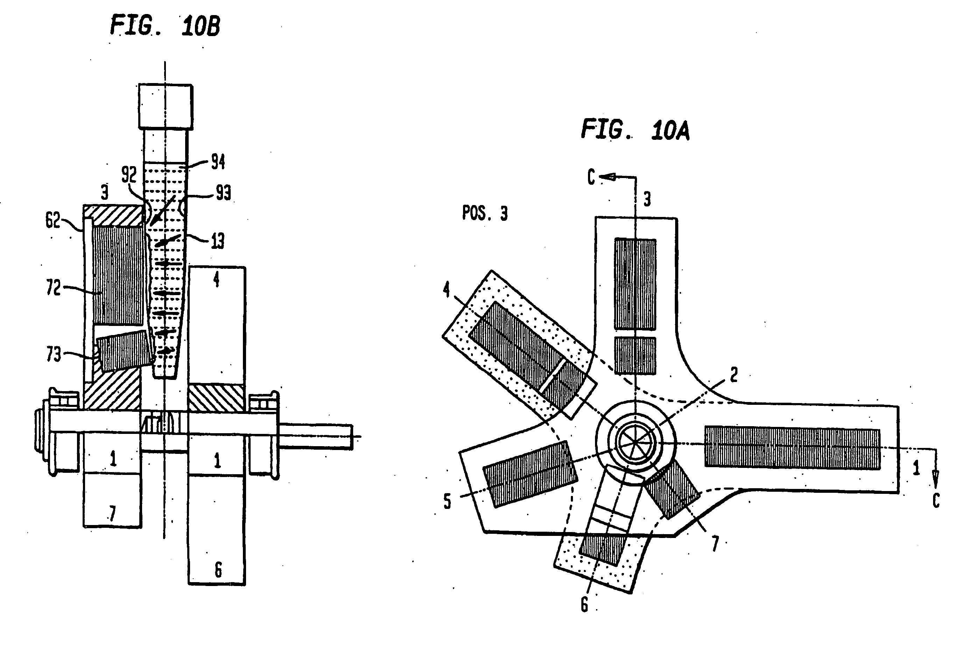

### Step 4 a: Washing of magnetic particles (Figs. 10a, 10b)

In this step carriers 62 and 63 have the angular position (Pos. 3) shown by Fig. 10a. Fig. 10b shows a cross-section through C-C in Fig. 10a. As shown by Fig. 10b, in this step 4a magnets 72, 73 mounted on carrier 62 and located close to the external surface of the side wall of reaction vessel 13 hold the magnetic particles located on side 92 of the inner surface of the side wall of the reaction vessel 13 and attract the layer of magnetic particles located on the opposite side of the inner surface of the side wall of the reaction vessel 13. The latter particles are thereby moved through wash buffer 94 and join the magnetic particles of layer which lie on the opposite side 92 of the inner surface of the side wall of reaction vessel 13. In this way the magnetic particles of layer which are moved from side 93 to the opposite side 92 get washed by wash buffer 94. At the end of this step 4a all magnetic particles are grouped in a layer on side 92 of the inner surface of the side wall of reaction vessel in a region close to magnets 72, 73.

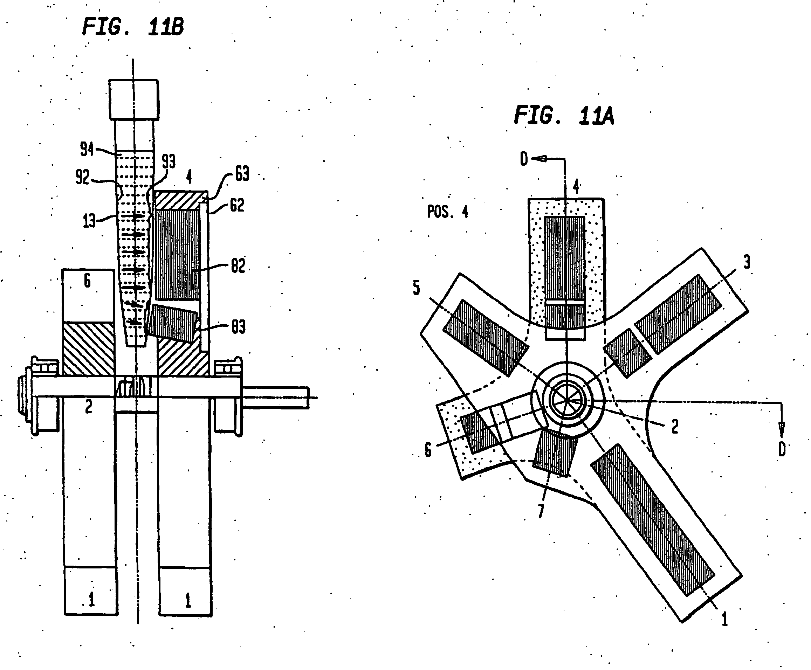

### Step 4b: Washing of magnetic particles (Figs. 11a, 11b)

In this step carriers 62 and 63 have the angular position (Pos. 4) shown by Fig. 11a. Fig. 11b shows a cross-section through D-D in Fig. 11a. As shown by Fig. 11b, in this step 4b magnets 82, 83 mounted on carrier 63 and located close to the external surface of the side wall of reaction vessel 13 move the magnetic particles from side 92 of the inner surface of the side wall of the reaction vessel 13 to the opposite side 93 of the inner surface of the side wall of the reaction vessel 13. The magnetic particles are moved through the first wash buffer 94 and get thereby washed by this wash buffer. At the end of this step 4b all magnetic particles are grouped in a layer on side 93 of the inner surface of the side wall of reaction vessel in a region close to magnets 82, 83.

Steps 4a and 4b are repeated e.g. 3 times.

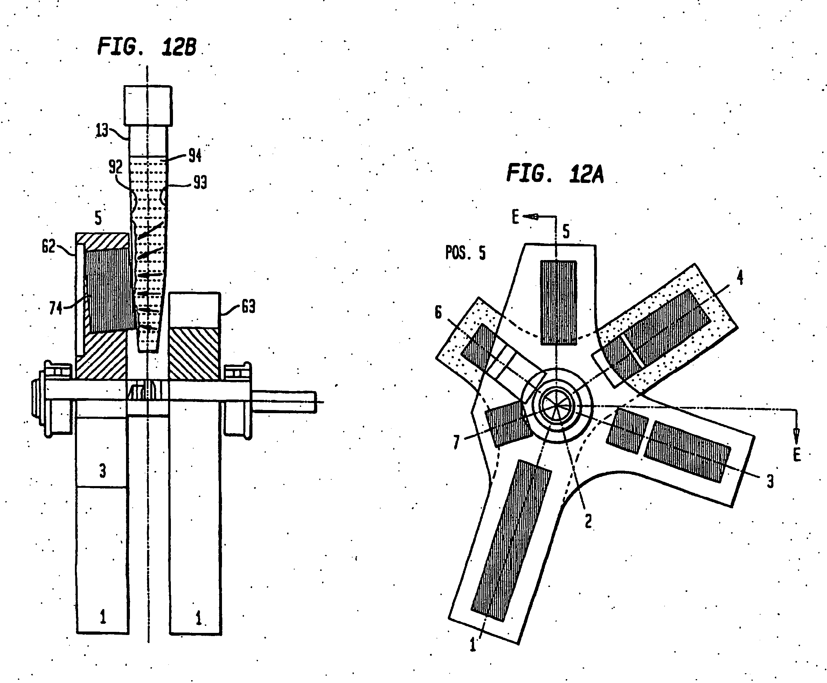

### Step 5: Separation of magnetic particles to low level (Figs. 12a, 12b)

In this step carriers 62 and 63 have the angular position (Pos. 5) shown by Fig. 12a. Fig. 12b shows a cross-section through E-E in Fig. 12a. As shown by Fig. 12b, in this step 5 a magnet 74 mounted on carrier 62 and located close to the lower part of the external surface of the side wall of reaction vessel 13 moves the magnetic particles from side 93 of the inner surface of the side wall of the reaction vessel 13 to the lower part of the opposite side 92 of the inner surface of the side wall of the reaction vessel 13.

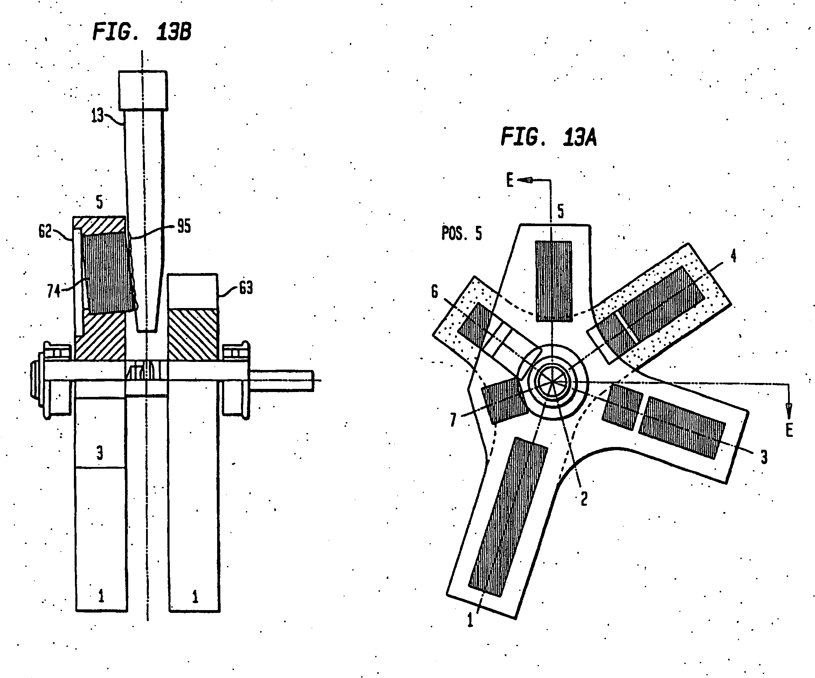

### Step 6: Aspiration of wash buffer (Figs. 13a, 13b)

As shown by Fig. 13a, in this step carriers 62 and 63 have the same angular position (Pos. 5) as in step 5. Fig. 13b shows a cross-section through E-E in Fig. 13a. In this step 6 the first wash buffer 94 is aspirated from reaction vessel 13 e.g. by means of an automatic pipettor, and as shown by Fig. 13b a layer 95 of magnetic particles remains held on the lower part of side 92 of the inner surface of the side wall of reaction vessel 13 by action of magnetic force exerted on those particles by magnet 74 mounted on carrier 62.

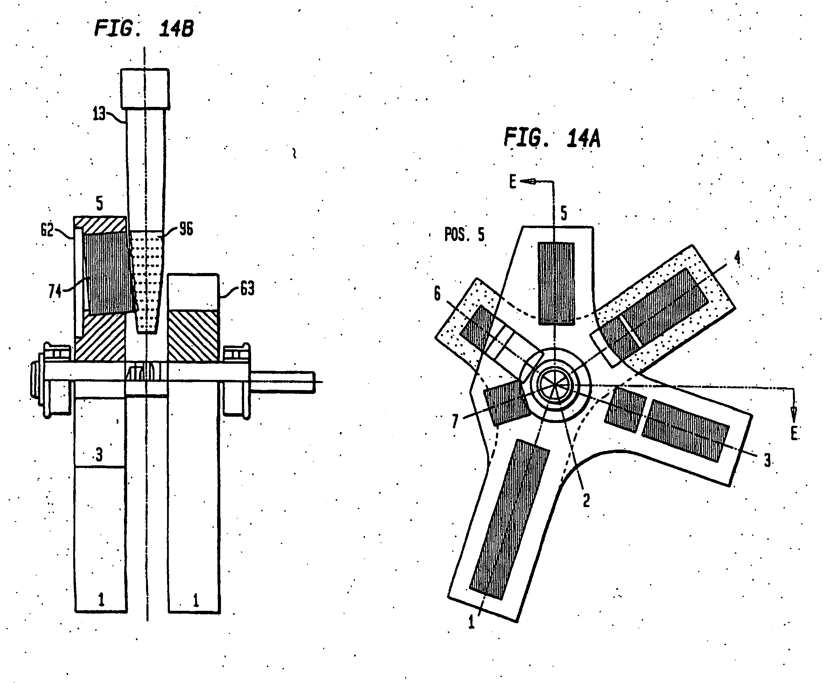

### Step 7: Dispensing of wash buffer (Figs. 14a, 14b)

As shown by Fig. 14a, in this step carriers 62 and 63 have the same angular position (Pos. 5) as in steps 5 and 6. Fig. 14b shows a cross-section through E-E in Fig. 14a. In this step 7 a predetermined volume, e.g. 1 ml, of a second wash buffer 96 is introduced in reaction vessel 13, and as shown by Fig. 14b a layer 95 of magnetic particles remains held on the inner surface of sides 92 of the side wall of reaction vessel 13 by magnetic force exerted on those particles by magnet 74 mounted on carrier 62.

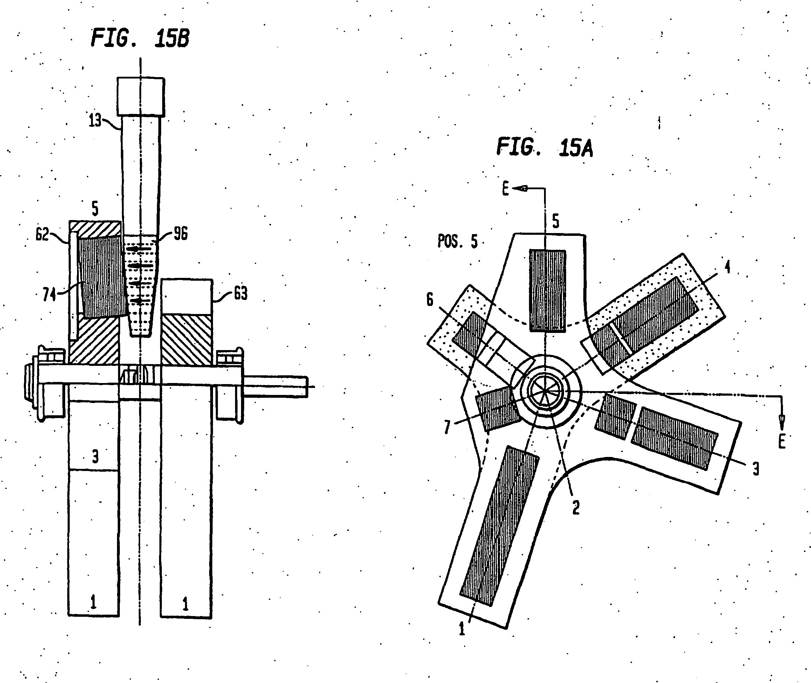

### Step 8a: Washing of magnetic particles (Figs. 15a, 15b)

In this step carriers 62 and 63 have the angular position (Pos. 5) shown by Fig. 15a. Fig. 15b shows a cross-section through E-E in Fig. 15a. As shown by Fig. 15b, in this step 8a magnet 74 mounted on carrier 62 and located close to the external surface of the side wall of reaction vessel 13 holds the magnetic particles located on the lower part of side 92 of the inner surface of the side wall of the reaction vessel 13. At the end of this step 8a all magnetic particles are grouped in a layer on side 92 of the inner surface of the side wall of reaction vessel in a region close to magnets 72, 73.

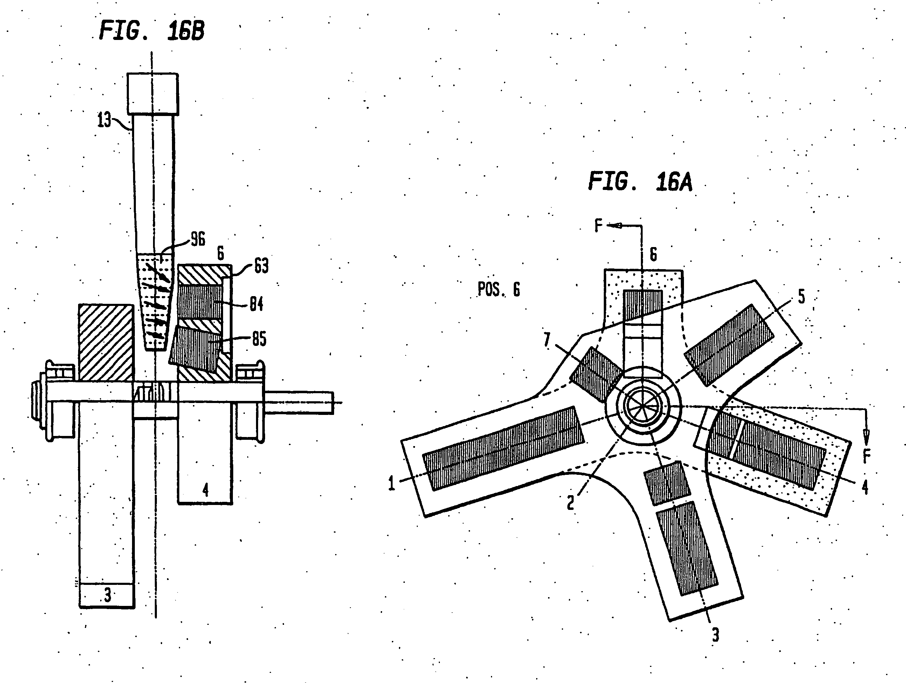

### Step 8b: Washing of magnetic particles (Figs. 16a, 16b)

In this step carriers 62 and 63 have the angular position (Pos. 6) shown by Fig. 16a. Fig. 16b shows a cross-section through F-F in Fig. 16a. As shown by Fig. 16b, in this step 8b magnets 84, 85 mounted on carrier 63 and located close to the external surface of the side wall of reaction vessel 13 move the magnetic particles from the lower part of side 92 to the lower part of opposite side 93 of the inner surface of the side wall of the reaction vessel 13. The magnetic particles are moved through wash buffer 96 and get thereby washed by this wash buffer. At the end of this step 8b all magnetic particles are grouped in a layer on the lower part of side 93 of the inner surface of the side wall of reaction vessel 13 in a region close to magnets 84, 85.

Steps 8a and 8b are repeated e.g. 3 times.

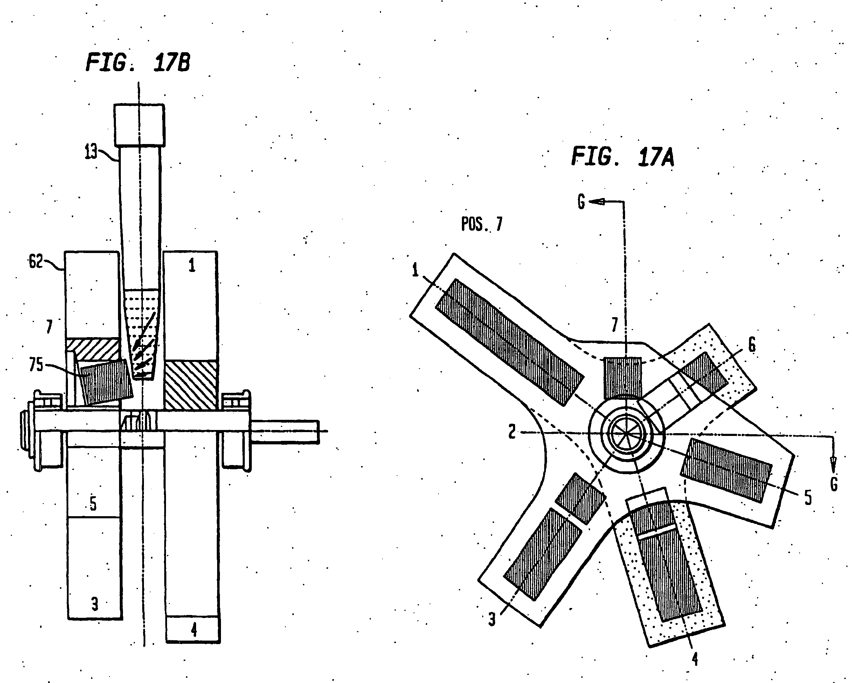

### Step 9: Separation of magnetic particles to low level (Figs. 17a, 17b)

In this step carriers 62 and 63 have the angular position (Pos. 7) shown by Fig. 17a. Fig. 17b shows a cross-section through G-G in Fig. 17a. As shown by Fig. 17b, in this step 9 magnet 75 mounted on carrier 62 and located close to the external surface of the side wall of reaction vessel 13 moves the magnetic particles from the lower part of side 93 to the lowest part of the opposite side 92 of the inner surface of the side wall of the reaction vessel 13.

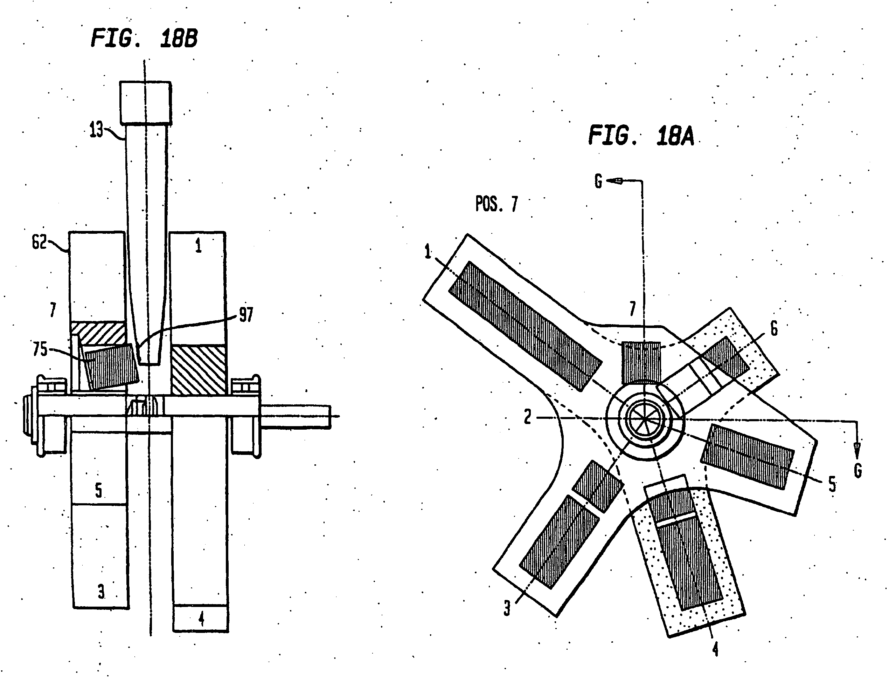

### Step 10: Aspiration of wash buffer (Figs. 18a, 18b)

As shown by Fig. 18a, in this step carriers 62 and 63 have the same angular position (Pos. 7) as in step 9. Fig. 18b shows a cross-section through G-G in Fig. 18a. In this step 10 the second wash buffer 94 is aspirated from reaction vessel 13 e.g. by means of an automatic pipettor, and as shown by Fig. 18b a layer 97 of magnetic particles remains held on the lowest part of side 92 of the inner surface of the side wall of reaction vessel 13 by action of magnetic force exerted on those particles by magnet 75 mounted on carrier 62.

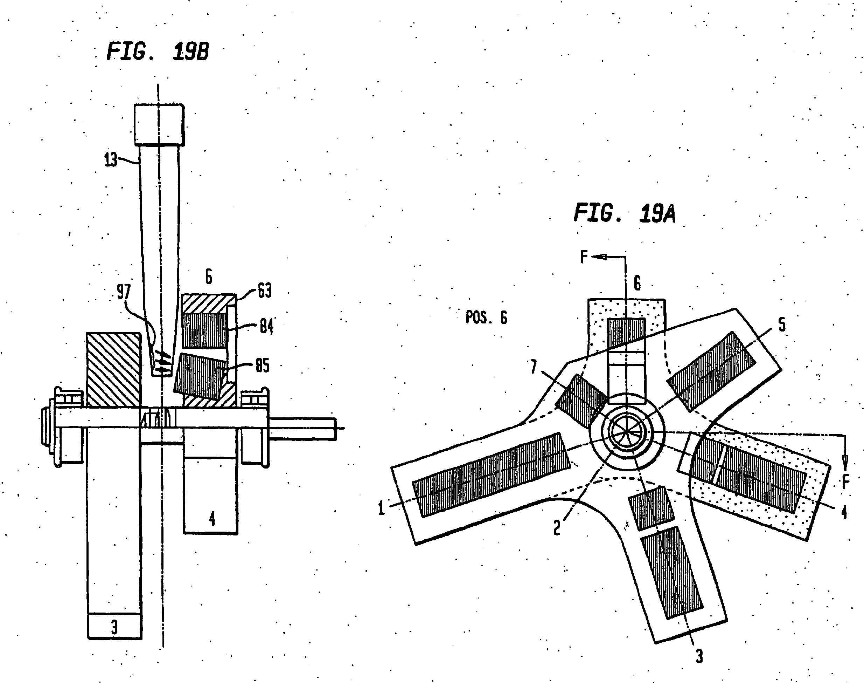

### Step 11: Release of pellets (Figs. 19a, 19b)

In this step carriers 62 and 63 have the angular position (Pos. 6) shown by Fig. 19a. Fig. 19b shows a cross-section through F-F in Fig. 19a. As shown by Fig. 19b, in this step 11 magnets 84, 85 mounted on carrier 63 and located close to the external surface of the side wall of reaction vessel 13 release pellets which form layer 97 of magnetic particles by moving them from the lowest part of side 92 to the lowest part of side 93 of the inner surface of the side wall of the reaction vessel 13.

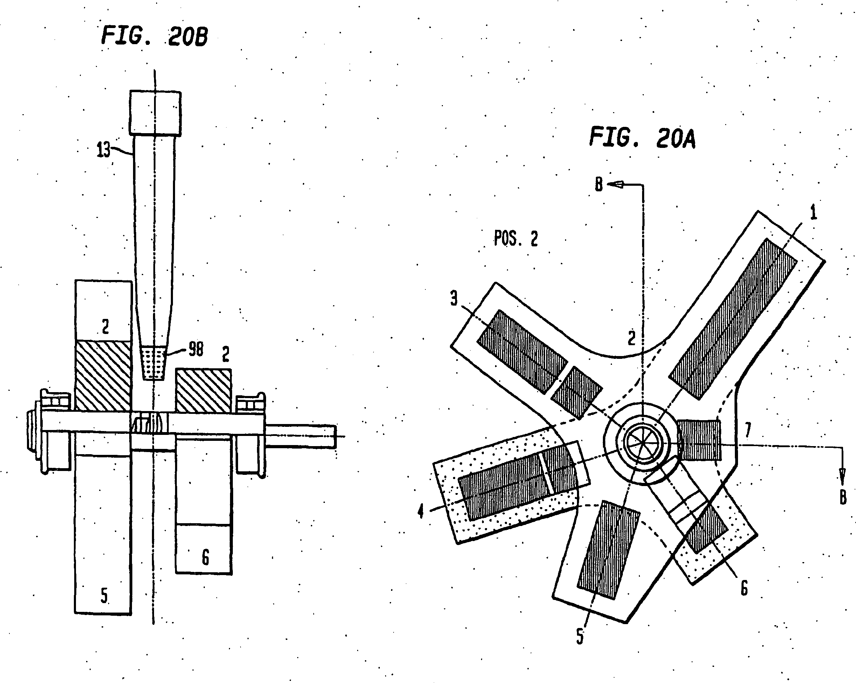

### Step 12: Addition of specimen diluent (Figs. 20a, 20b)

In this step carriers 62 and 63 have the angular position (Pos. 2) shown by Fig. 20a. Fig. 20b shows a cross-section through B-B in Fig. 20a. As shown by Fig. 20b, in this step 12 none of the magnets mounted on carriers 62 and 63 are located close to the external surface of the side wall of reaction vessel 13. A predetermined volume of specimen diluent 98 is dispensed into reaction vessel 13.

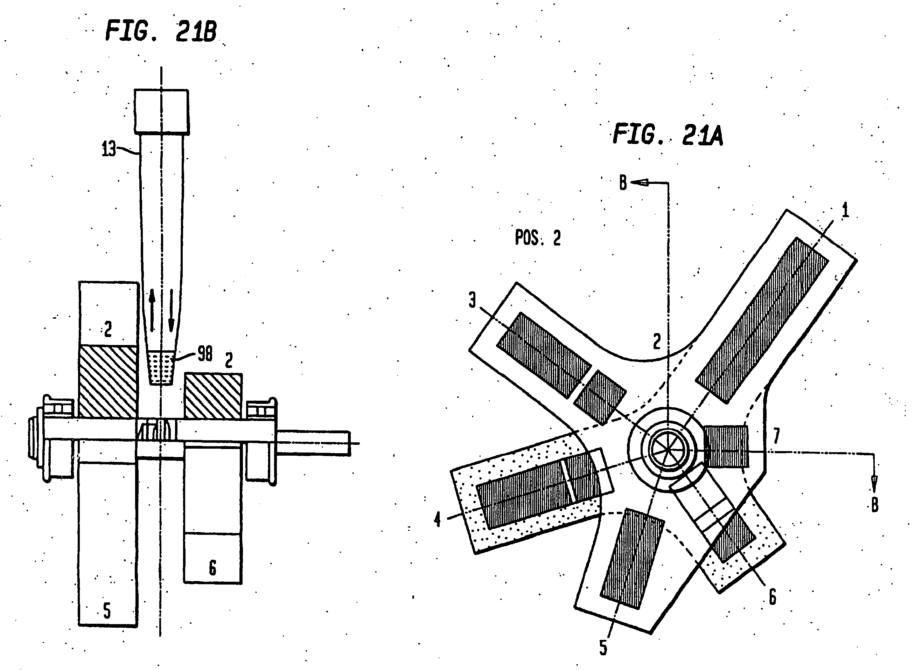

### Step 13: Mixing of magnet particles in reaction vessel (Figs. 21a, 21b)

As shown by Fig. 21a, in this step carriers 62 and 63 have the same angular position (Pos. 2) as in step 12. Fig. 21b shows a cross-section through B-B in Fig. 21a. In this step 13, by means of a so called tituration step the magnet particles present in the suspension contained in the reaction vessel 13 are thoroughly mixed by repeatedly aspirating said liquid from the vessel and redispensing it into the reaction vessel, e.g. by means of an automatic pipettor. This aspirating and redispensing is suggested in Fig. 21b by arrows pointing in opposite senses. At the end of step 13 reaction vessel contains a sample containing nucleic acid extracted from the biological cell material contained in the primary sample contained in reaction vessel 13 at the beginning of step 1. The nucleic acid sample present in reaction vessel 13 at the end of step 13 can be used e.g. for carrying out a polymerase chain reaction to amplify said nucleic acid.

### Supplementary description of above described embodiments

A common feature of the above described embodiments is that the means for selectively positioning the carrier or carriers which hold the magnet elements are adapted to position said carrier or carriers at predetermined angular positions which are selected according to a processing step to be carried out in that reaction vessel 13 and/or according to the amount of liquid in the reaction vessel 13.

As described above with reference to embodiments 1 and 2 at some of the predetermined angular positions of the carrier or carriers of magnet elements one or more magnet elements can be positioned close to the external surface of only one side of the reaction vessel 13, whereas in other of such predetermined angular positions one or more magnet elements can be positioned close to the external surface of the reaction vessel 13 on one side thereof and also close to the external surface of the reaction vessel on the opposite side thereof. As described above in particular with reference to embodiment 2 at least one of the predetermined angular positions of the carrier or carriers of magnet elements can be a position at which no magnet element is located close to any external surface of the reaction vessel 13.

In all above described embodiments of an apparatus:
- each of the magnet elements of said array or arrays of magnet elements preferably comprises one or more magnets having the same width and the same azimuthal position on the carrier of the array, and
- the axis of rotation of the carrier, respectively of each of the carriers, preferably intersects with the length axis of the reaction vessel at a point located below the bottom of the reaction vessel.

In embodiments comprising two carriers of arrays of magnet elements, these carriers have a common axis of rotation.

In all above described embodiments of an apparatus, the apparatus comprises a motor and mechanical transmission means controlled by suitable control means for rotating and selectively positioning said carrier 11 and thereby said array of magnet elements at a plurality of predetermined angular positions with respect to reaction vessel. Such control means preferably include means which perform the necessary control in response to commands provided by a process control unit which controls the processing of a sample-reagent mixture being processed in the reaction vessel. All control means just mentioned can be e.g. part of a control unit of an automatic apparatus. Such control means can include hardware and software means.

## Claims

1. Apparatus for separating magnetic particles in suspension in a liquid, said apparatus including
(a) a first rotatable carrier (62) holding a first array of magnet elements,
(b) a second rotatable carrier (63) offset from said first carrier (62) and holding a second array of magnet elements each of said first and second arrays of magnet elements comprising a first magnet element and at least a second magnet element, said apparatus being **characterized in that**
said first and second carriers (62, 63) define a region therebetween and are rotatable about a rotation axis common to both carriers,
**in that** said first and second magnet elements are positioned on the carrier at different distances from the rotation axis common to said carriers and the centers of the first magnet element and of the at least second magnet element lie on radii located at different azimuth angles,
and **characterised in that** said apparatus further comprises
(c) an elongated reaction vessel (13) located in said region, said reaction vessel having a length axis and containing suspended magnetic particles, said length axis lying in a plane that is normal to the rotation axis of said first and second carriers (62, 63), and
(d) means for selectively positioning said carriers (62, 63) and thereby said first and second arrays of magnet elements at a plurality of predetermined angular positions measured on a plane normal to said rotation axis of said carriers (62, 63),
in some angular positions of said first and second carriers (62, 63) at least one of the magnet elements on said first carrier (62) is disposed across said region from a corresponding one of the magnet elements on said second carrier (63), and
in some other angular positions of said first and second carriers (62, 63) at least one other one of the magnet elements on said first carrier (62) and at least one other one of the magnet elements on said second carrier (63) being asymmetrically positioned with respect to the reaction vessel.

2. An apparatus according to claim 1, **characterized in that** each of said first and second arrays of magnet elements comprises
a first magnet element mounted on said carrier (42 respectively 43) at a first azimuthal position, the center of said first magnet lying at a first distance from the center of said carrier, no other magnet being mounted on said carrier (42, 43) at said first azimuthal position, and
a second magnet element mounted on said carrier (42 respectively 43) at a second azimuthal position, the center of said second magnet lying at a second distance from the center of said carrier, said second distance being different from said first distance, no other magnet being mounted on said carrier (42, 43) at said second azimuthal position

3. An apparatus according to any of the preceding claims, **characterized in that** each of the magnet elements of said first and second arrays of magnet elements comprises one or more magnets having the same width and the same azimuthal position on the carrier of the array.

4. An apparatus according to claim 1, **characterized in that** the axis of rotation of said first carrier (62) and the axis of rotation of said second carrier (63) intersects with the length axis of the reaction vessel (13) at a point located below the bottom of the reaction vessel.

5. An apparatus according to claim 1, **charaterized in that** said means for selectively positioning said first and second carriers (62, 63) at predetermined angular positions are adapted for positioning said carriers (62, 63) at angular positions which are selected according to a processing step to be carried out in that reaction vessel (13) and/or according to the amount of liquid in the reaction vessel.

6. An apparatus according to claim 1, **characterized in that** said plurality of predetermined angular positions include one position at which no magnet element is located close to any external surface of the reaction vessel (13).

## Patentansprüche

1. Vorrichtung zum Abtrennen magnetischer Partikel, die in einer Flüssigkeit suspendiert sind, wobei die Vorrichtung umfasst:
(a) einen ersten rotierbaren Träger (62), der eine erste Anordnung magnetischer Elemente trägt,
(b) einen zweiten rotierbaren Träger (63), der gegenüber dem ersten Träger (62) versetzt ist und eine zweite Anordnung magnetischer Elemente trägt, wobei jede der ersten und zweiten Anordnungen magnetischer Elemente ein erstes Magnetelement und mindestens ein zweites Magnetelement aufweist,
wobei die Vorrichtung dadurch charakterisiert ist, dass
der erste Träger (62) und der zweite Träger (63) einen dazwischen liegenden Zwischenbereich definieren und um eine für beide Träger gemeinsame Rotationsachse drehbar sind,
dadurch, dass das erste magnetische Element und das zweite magnetische Element an dem Träger mit unterschiedlichen Abständen von der gemeinsamen Rotationsachse der Träger positioniert sind und die Zentren des ersten magnetischen Elements und des mindestens zweiten magnetischen Elements auf Radien liegen, die unter verschiedenen Azimuthwinkeln lokalisiert sind,
und **dadurch gekennzeichnet, dass** die Vorrichtung weiterhin umfasst,
(c) ein langgestrecktes Reaktionsgefäß (13), das in dem Zwischenbereich lokalisiert ist, wobei das Reaktionsgefäß eine Längsachse hat und suspendierte magnetische Partikel enthält, und wobei die Längsachse in einer Ebene liegt, die normal zu der Rotationsachse des ersten Trägers (62) und des zweiten Trägers (63) orientiert ist, und
(d) Mittel zur selektiven Positionierung der Träger (62, 63) und damit der ersten und der zweiten Anordnung magnetische Elemente in einer Mehrzahl von vorbestimmten Winkelpositionen, gemessen in einer Ebene, welche normal zu den Rotationsachsen der Träger (62, 63) orientiert ist,
wobei in einigen Winkelpositionen des ersten Trägers (62) und des zweiten Trägers (63) mindestens eines der magnetischen Elemente auf dem ersten Träger (62) jenseits des Zwischenbereiches gegenüber einem entsprechenden magnetischen Element des zweiten Trägers (63) angeordnet ist, und
in einigen anderen Winkelpositionen des ersten Trägers (62) und des zweiten Trägers (63) mindestens ein weiteres der magnetischen Elemente des ersten Trägers (62) und mindestens ein weiteres der magnetischen Elemente des zweiten Trägers (63) asymmetrisch hinsichtlich einer Achse des Reaktionsgefäßes positioniert sind.

2. Vorrichtung nach Anspruch 1, **dadurch gekennzeichnet, dass** jede der ersten Anordnung und der zweiten Anordnung magnetischer Elemente umfasst:
ein erstes magnetisches Element, welches auf dem Träger (42 bzw. 43) an einer ersten Azimuthposition lokalisiert ist, wobei das Zentrum des ersten Magneten mit einem ersten Abstand von dem Zentrum des Trägers angeordnet ist, wobei kein anderer Magnet auf dem Träger (42, 43) an der ersten Azimuthposition befestigt ist, und
ein zweites magnetisches Element, das auf dem Träger (42 bzw. 43) in einer zweiten Azimuthposition befestigt ist, wobei das Zentrum des zweiten Magneten mit einem zweiten Abstand von dem Zentrum des Trägers angeordnet ist, wobei der zweite Abstand verschieden von dem ersten Abstand ist und kein anderer Magnet auf dem Träger (42, 43) an der zweiten Azimuthposition befestigt ist.

3. Vorrichtung nach einem der vorhergehenden Ansprüche, **dadurch gekennzeichnet, dass** jedes der magnetischen Elemente der ersten Anordnung und der zweiten Anordnung magnetischer Elemente einen oder mehrere Magneten einschließt, die auf dem Träger der Anordnung gleiche Breite und die gleiche Azimuthposition haben.

4. Vorrichtung nach Anspruch 1, **dadurch gekennzeichnet, dass** sich die Rotationsachse des ersten Trägers (62) und die Rotationsachse des zweiten Trägers (63) mit der Längsachse des Reaktionsgefäßes (13) an einem Punkt schneiden, der sich unterhalb des Bodens des Reaktionsgefäßes befindet.

5. Vorrichtung nach Anspruch 1, **dadurch gekennzeichnet, dass** die Mittel zur selektiven Positionierung des ersten Trägers (62) und des zweiten Trägers (63) in vorbestimmten Winkelpositionen dazu ausgebildet sind, die Träger (62, 63) in Winkelpositionen zu positionieren, die entsprechend einem Verarbeitungsschritt gewählt sind, der in dem Reaktionsgefäß (13) ausgeführt werden soll und/oder entsprechend einer Flüssigkeitsmenge in dem Reaktionsgefäß.

6. Vorrichtung nach Anspruch 1, **dadurch gekennzeichnet, dass** die Mehrzahl vorbestimmter Winkelpositionen eine Position einschließt, bei der kein magnetisches Element in der Nähe irgendeiner äußeren Oberfläche des Reaktionsgefäßes lokalisiert ist (13).

## Revendications

1. Appareil pour séparer des particules magnétiques en suspension dans un liquide, ledit appareil comportant :
(a) un premier porteur rotatif (62) portant un premier réseau d'éléments d'aimant,
(b) un deuxième porteur rotatif (63) décalé dudit premier porteur (62) et portant un deuxième réseau d'éléments d'aimant, chacun dudit premier et dudit deuxième réseaux d'éléments d'aimant comprenant un premier élément d'aimant et au moins un deuxième élément d'aimant,
ledit appareil étant **caractérisé en ce que** lesdits premier et deuxième porteurs (62, 63) définissent une région entre ceux-ci et peuvent pivoter autour d'un axe de rotation commun aux deux porteurs, **en ce que** lesdits premier et deuxième éléments d'aimant sont positionnés sur le porteur à des distances différentes de l'axe de rotation commun auxdits porteurs et les centres du premier élément d'aimant et de l'au moins deuxième élément d'aimant se trouvent sur des rayons situés au niveau d'angles azimutaux différents,
et **caractérisé en ce que** ledit appareil comprend en outre
(c) une cuve de réaction allongée (13) située dans ladite région, ladite cuve de réaction ayant un axe de longueur et contenant des particules magnétiques suspendues, ledit axe de longueur se trouvant dans un plan qui est normal par rapport à l' axe de rotation desdits premier et deuxième porteurs (62, 63), et
(d) des moyens pour positionner de façon sélective lesdits porteurs (62, 63) et de ce fait lesdits premier et deuxième réseaux d'éléments d'aimant au niveau d'une pluralité de positions angulaires prédéterminées mesurées sur un plan normal par rapport à l'axe de rotation desdits porteurs (62, 63),
dans certaines positions angulaires desdits premier et deuxième porteurs (62, 63) au moins un des éléments d'aimant sur ledit premier porteur (62) est disposé à travers ladite région depuis un élément d'aimant correspondant parmi les éléments d'aimant sur ledit deuxième porteur (63), et
dans certaines autres positions angulaires desdits premier et deuxième porteur (62, 63) au moins un autre élément d'aimant parmi les éléments d'aimant sur ledit premier porteur (62) et au moins un autre élément d'aimant parmi les éléments d'aimant sur ledit deuxième porteur (63) étant positionnés de façon asymétrique par rapport à la cuve de réaction.

2. Appareil selon la revendication 1, **caractérisé en ce que** chacun parmi lesdits premier et deuxième réseaux d'éléments d'aimant comprend :
◆ un premier élément d'aimant monté sur ledit porteur (42 respectivement 43) au niveau d'une première position azimutale, le centre dudit premier aimant se trouvant à une première distance du centre dudit porteur, aucun autre aimant n'étant monté sur ledit porteur (42, 43) au niveau de ladite première position azimutale, et
◆ un deuxième élément d'aimant monté sur ledit porteur (42 respectivement 43) au niveau d'une deuxième position azimutale, le centre dudit deuxième aimant se trouvant à une deuxième distance du centre dudit porteur, ladite deuxième distance étant différente de ladite première distance, aucun autre aimant n'étant monté sur ledit porteur (42, 43) au niveau de ladite deuxième position azimutale.

3. Appareil selon l'une quelconque des revendications précédentes, **caractérisé en ce que** chacun des éléments d'aimant desdits premier et deuxième réseaux d'éléments d'aimant comprend un ou plusieurs aimants ayant la même largeur et la même position azimutale sur le porteur du réseau.

4. Appareil selon la revendication 1, **caractérisé en ce que** l'axe de rotation dudit premier porteur (62) et l'axe de rotation dudit deuxième porteur (63) croisent l'axe de longueur de la cuve de réaction (13) au niveau d'un point situé en dessous de la partie inférieure de la cuve de réaction.

5. Appareil selon la revendication 1, **caractérisé en ce que** lesdits moyens pour positionner de façon sélective lesdits premier et deuxième porteurs (62, 63) au niveau de positions angulaires prédéterminées sont adaptés pour positionner lesdits porteurs (62, 63) au niveau de positions angulaires qui sont sélectionnées selon une étape de traitement à exécuter dans cette cuve de réaction (13) et/ou selon la quantité de liquide dans la cuve de réaction.

6. Appareil selon la revendication 1, **caractérisé en ce que** ladite pluralité de positions angulaires prédéterminées comportent une position à laquelle aucun élément d'aimant n'est situé près d'une quelconque surface externe de la cuve de réaction (13).
